# EUROPÄISCHE PATENTANMELDUNG

(11) **EP 2 233 351 A1**
(43) Veröffentlichungstag der Anmeldung: **29.09.2010**
(21) Anmeldenummer: 10002991.7
(22) Anmeldetag: 22.03.2010
(51) Int. Cl.: B60N 2/60, B60R 21/207

(54) **Bezug für einen Fahrzeugsitz eines Kraftfahrzeuges**

(30) Priorität: 25.03.2009 AT 1792009 U
(71) Anmelder: Walser GmbH, 6845 Hohenems (AT)
(72) Erfinder: Walser, Hans Karl, 6845 Hohenems (AT)
(74) Vertreter: Hofmann, Ralf U.

(57) **Zusammenfassung**

Ein Bezug für einen Fahrzeugsitz (1) eines Kraftfahrzeuges, der einen Sitzteil (2) mit einer einem Benutzer zugewandten Sitzfläche und eine Rückenlehne (3) mit einer dem Benutzer zugewandten vorderen Lehnenfläche aufweist, umfasst einen vorderen Abschnitt (7) zum Überdecken zumindest eines Teils der vorderen Lehnenfläche der Rückenlehne (3) und vorzugsweise auch zumindest eines Teils der Sitzfläche des Sitzteils (2) und einen hinteren Abschnitt (8), der im an den Fahrzeugsitz (1) angelegten Zustand des Bezuges zumindest einen oberen Teil der Rückseite (4) der Rückenlehne (3) überdeckt. Der vordere Abschnitt (7) und/oder der hintere Abschnitt (8) weist bzw. weisen an gegenüberliegenden Seitenrändern (13, 14) des Bezuges jeweils mindestens einen überstehenden Verbindungsfortsatz (15-18) zur Herstellung von sich über die Seitenflächen (5) der Rückenlehne (3) erstreckenden Verbindungen zwischen dem vorderen Abschnitt und dem hinteren Abschnitt auf, wobei die Verbindungen mittels Klettverschlüssen (19, 20) schließbar und wieder öffenbar sind.

## Beschreibung

Die Erfindung bezieht sich auf einen Bezug für einen Fahrzeugsitz eines Kraftfahrzeuges, der einen Sitzteil mit einer einem Benutzer zugewandten Sitzfläche und eine Rückenlehne mit einer dem Benutzer zugewandten vorderen Lehnenfläche aufweist, wobei der Bezug einen vorderen Abschnitt zum Überdecken zumindest eines Teils der vorderen Lehnenfläche der Rückenlehne und vorzugsweise auch zumindest eines Teils der Sitzfläche des Sitzteils und einen hinteren Abschnitt aufweist, der im an den Fahrzeugsitz angelegten Zustand des Bezuges zumindest einen oberen Teil der Rückseite der Rückenlehne überdeckt.

Schonbezüge für Sitze von Kraftfahrzeugen sind in vielen unterschiedlichen Ausführungsformen bekannt. Beispielsweise geht aus der AT 412 548 B ein relativ aufwendig ausgebildeter Schonbezug hervor, der einen separaten Rückenlehnenbezug zum Bezug der Rückenlehne des Autositzes und einen vom Rückenlehnenbezug getrennten Sitzbezug zum Bezug des Sitzteils umfasst. Der Rückenlehnenbezug umhüllt die Rückenlehne im Wesentlichen vollständig, wobei ein rückseitiger Abschnitt des Rückenlehnenbezugs über einen Reißverschluss mit Seitenabschnitten des Rückenlehnenbezugs, die die Seitenflächen des Fahrzeugsitzes überdecken, verbunden ist. Die Reißverschlüsse an den beiden Seiten des Sitzes erstrecken sich weiter bis auf die Oberseite der Rückenlehne des Sitzes und enden dort im Abstand zueinander, um einen Durchtritt von Verankerungsstäben einer Nackenstütze zu ermöglichen. Zwischen den beiden Verankerungsstäben sind die beiden Abschnitte des Sitzbezugs über einen Klettverschluss miteinander verbunden, wobei am Rand des einen Teils eine Lasche angenäht ist, die den einen Klett-Verschlussteil aufweist, der mit dem am anderen Abschnitt des Schonbezugs angeordneten zweiten Klett-Verschlussteil verbindbar ist. Die die Seitenflächen der Rückenlehne des Fahrzeugsitzes überdeckenden Seitenteile des Schonbezugs sind unter die Seitenränder des die Vorderseite der Rückenlehne überdeckenden vorderen Abschnitts nur eingeschoben, wodurch ein in der Rückenlehne integrierter und bei seinem Aufblasen aus einer der Seitenflächen der Rückenlehne austretender Airbag an seiner Entfaltung nicht gehindert wird.

Aus der DE 296 20 382 U1 ist ein Schonbezug für einen Kraftfahrzeugsitz bekannt, der die vordere Lehnenfläche und die Seitenflächen der Rückenlehne vollständig überspannt. Im Bereich eines die Seitenfläche der Rückenlehne überspannenden seitlichen Abschnitts des Schonbezugs weist dieser eine Öffnung auf, die von einem Einsatzteil überdeckt ist. Das Einsatzteil ist am seitlichen Abschnitt des Schonbezugs beispielsweise über ein Klettverschlussband gehalten, um den Austritt eines Seiten-Airbags zu ermöglichen. Im Falle des Aufblasens des Airbags wir dieser Einsatz weggesprengt oder es wird zumindest einseitig die Verbindung aufgerissen. Dieser Schonbezug ist nicht für unterschiedliche Fahrzeugsitze mit sich unterscheidenden Abmessungen einsetzbar sondern muss an den jeweiligen Fahrzeugsitz weitgehend angepasst sein. Zudem besteht die Gefahr, dass der relativ großflächige Klettverschluss, der das Einsatzteil mit den seitlichen Abschnitten verbindet dem Entfalten des Airbags einen zu großen Widerstand entgegensetzt.

Aus der AT 001 186 U1 geht ein Schonbezug für einen Kraftfahrzeugsitz hervor, bei dem der Rückenlehnenbezug die Rückenlehne im Wesentlichen vollständig einhüllt. Der hintere Abschnitt des Rückenlehnenbezugs ist an seinem unteren Ende verlängert und mit einem Klettverschlussband versehen, um den hinteren Abschnitt des Rückenlehnenbezugs durch eine Öffnung zwischen der Rückenlehne und dem Sitzteil durchzufädeln und mit dem vorderen Abschnitt des Rückenlehnenbezuges zu verbinden. Weiters ist ein Schonbezug für eine hintere Sitzbank eines Kraftfahrzeuges gezeigt, wobei ein oberes Ende über die Oberseite der Rückenlehne gelegt ist und am Rand mit einem Kletthakenband versehen ist, um an der Rückseite der Rückenlehne, die normalerweise mit einem mehr oder weniger flauschigen Material überzogen ist, befestigt zu werden.

Aus der EP 0 860 318 B1 geht ein Schonbezug für einen Kraftfahrzeugsitz hervor, der einen die Rückenlehne umschließenden Teil aufweist. Dieser besitzt einen vorderen Abschnitt, der die vordere Lehnenfläche und auch noch einen Teil der Seitenflächen der Lehne überdeckt, und einen hinteren Abschnitt, der sich im Wesentlichen über die gesamte Höhe der Lehne erstreckt und mit dem vorderen Abschnitt nur im oberen Bereich über eine Naht verbunden ist, sodass über den restlichen Teil der Höhe der Lehne die Ränder des vorderen und des hinteren Abschnitts einen mehr oder weniger breiten offenen Spalt begrenzen, in welchem die vorgesehene Austrittsöffnung eines Seiten-Airbags liegen kann. Der untere Rand des hinteren Abschnitts ist als tunnelartiger Bund zum Durchziehen eines Gummibandes ausgebildet, deren den tunnelartigen Bund beidseitig überragenden Enden am unteren Bereich des vorderen Abschnitts angenäht sind. Damit das Austreten des Seiten-Airbags durch die Öffnung ermöglicht wird, muss sich das Gummiband ausreichend weit unterhalb der Austrittsöffnung des Seiten-Airbags befinden.

Aufgabe der Erfindung ist es einen Bezug der eingangs genannten Art bereitzustellen, der bei einer einfachen und optisch ansprechenden Ausbildung ein hohes Anpassungsvermögen an unterschiedlich gestaltete Kraftfahrzeugsitze besitzt, wobei er den Austritt eines im Kraftfahrzeugsitz gegebenenfalls integrierten Seiten-Airbags ermöglicht. Erfindungsgemäß gelingt dies durch einen Bezug mit den Merkmalen des Anspruchs 1.

Beim erfindungsgemäßen Bezug weist der vordere Abschnitt und/oder der hintere Abschnitt an gegenüberliegenden Seitenrändern des Bezugs jeweils mindestens einen überstehenden Verbindungsfortsatz auf, über den eine über die Seitenfläche der Rückenlehne sich erstreckende Verbindung zwischen dem vorderen Abschnitt und dem hinteren Abschnitt herstellbar ist, wobei diese Verbindung mittels eines Klettverschlusses geschlossen wird. Falls sich der Seiten-Airbag aufbläst, kann von ihm die über den betreffenden Verbindungsfortsatz bzw. die betreffenden Verbindungsfortsätze verlaufende Verbindung zwischen dem vorderen Abschnitt und dem hinteren Abschnitt durch Öffnen des Klettverschlusses geöffnet werden. Da die Verbindung des vorderen Abschnitts mit dem hinteren Abschnitt über die Seitenflächen der Rückenlehne nur über die Verbindungsabschnitte erfolgt, kann hierbei auch die dem Öffnen des Seiten-Airbags entgegenstehende Kraft relativ gering gehalten werden. Ein erfindungsgemäßer Bezug ist zudem sehr anpassungsfähig an unterschiedliche gestaltete Fahrzeugsitze, einfach ausgebildet und einfach anlegbar.

Vorzugsweise erstreckt sich der hintere Abschnitt des Bezuges nur über einen oberen Teil der Rückseite der Rückenlehne, d.h. ein unterer Teil der Rückseite der Rückenlehne, beispielsweise zumindest die Hälfte der Höhe der Rückenlehne, bleibt unbedeckt. Der hintere Abschnitt des Bezuges ist somit kürzer als der zur Anlage an der vorderen Lehnenfläche der Rückenlehne vorgesehene Teil des vorderen Abschnitts des Bezugs, beispielsweise höchstens halb so lang.

Zwischen dem vorderen Abschnitt und dem hinteren Abschnitt des Bezugs befindet sich ein oberer Abschnitt, der über die Oberseite der Rückenlehne verläuft. Beispielsweise kann der vordere Abschnitt und ein daran anschließender Teil des oberen Abschnitts von einem ersten Teilstück des Bezugs gebildet werden und der hintere Abschnitt und ein daran anschließender Teil des oberen Abschnitts von einem zweiten Teilstück des Bezugs gebildet werden, wobei die beiden Teilstücke miteinander vernäht sind. Günstigerweise weist der obere Abschnitt eine Öffnung zum Durchtritt einer Kopfstütze bzw. von Halterungsstäben einer Kopfstütze auf, wobei sich diese Öffnung auch in den oberen Endbereich des vorderen Abschnitts und/oder den oberen Endbereich des hinteren Abschnitts erstrecken kann. Im Falle der genannten Ausbildung des Bezugs aus ersten und zweiten Teilstücken kann sich dann die Naht beidseitig dieser Öffnung erstrecken.

In einer vorteilhaften Ausführungsform der Erfindung ist vorgesehen, dass sowohl der vordere Abschnitt als auch der hintere Abschnitt des Bezuges an beiden Seitenrändern des Bezuges jeweils einen überstehenden Verbindungsfortsatz aufweisen, wobei die Enden der zur gegenseitigen Verbindung vorgesehenen Verbindungsfortsätze im Bereich einer jeweiligen Seitenfläche der Rückenlehne liegen und mittels Klettverschlüssen verbunden sind.

In herkömmlicher Weise kann vorgesehen sein, dass an den Seitenrändern eines die Sitzfläche überdeckenden Bereichs des vorderen Abschnitts des Bezuges Gummibandschlaufen angebracht sind, um den vorderen Abschnitt des Bezuges in diesem Bereich unterhalb des Fahrzeugsitzes, beispielsweise mittels eines durch die Gummibandschlaufen gefädelten Bandes, mit dem Fahrzeugsitz zu verspannen.

Vorzugsweise ist der vordere Abschnitt des Bezuges einteilig ausgebildet, d.h. der vordere Abschnitt ist einstückig (also aus einem nahtlos durchgehenden textilen Material bestehend) oder aus zwei oder mehreren, insbesondere durch Nähen miteinander verbundenen Teilen, und nicht etwa aus separaten Teilen zum Überdecken der Sitzfläche und zum Überdecken der vorderen Lehnenfläche ausgebildet. Besonders bevorzugt ist der Bezug insgesamt einteilig ausgebildet.

Ein erfindungsgemäßer Bezug kann in vorteilhafter Weise als Schonbezug für einen Kraftfahrzeugsitz eingesetzt werden. Es kann hierbei auch eine ansprechende Optik erreicht werden.

Weitere Vorteile und Einzelheiten der Erfindung werden im Folgenden anhand der beiliegenden Zeichnung erläutert. In dieser zeigen:

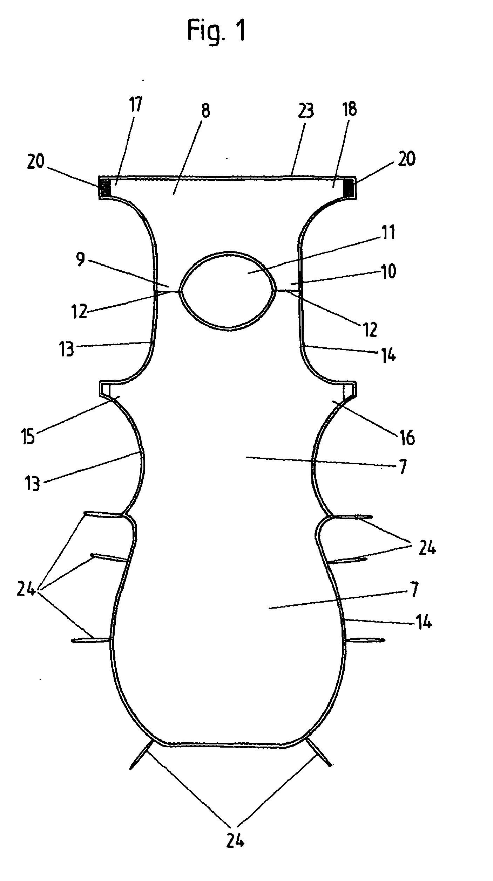

Fig. 1 und 2 Ansichten eines Ausführungsbeispiels eines erfindungsgemäßen Bezuges im flach ausgelegten Zustand, von vorne und von hinten;

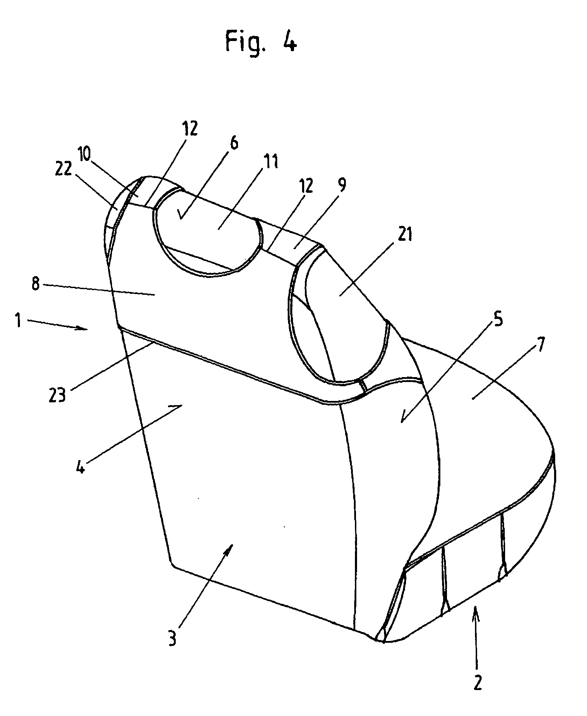

Fig. 3 und 4 Schrägsichten des an einem Fahrzeugsitz angebrachten Bezuges aus unterschiedlichen Blickwinkeln, die Kopfstütze des Fahrzeugsitzes der Einfachheit halber weggelassen.

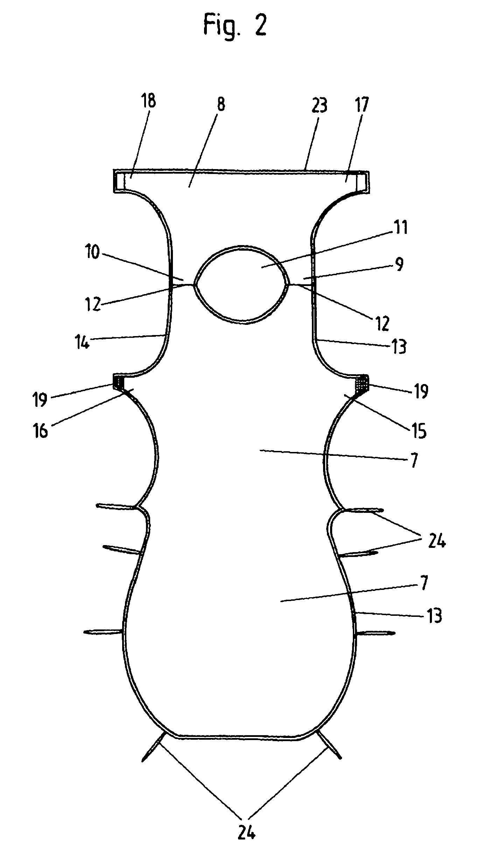

Ein Ausführungsbeispiel eines Bezuges gemäß der Erfindung ist in den Figuren dargestellt. Der Bezug ist zum Anlegen an einen Fahrzeugsitz 1 eines Kraftfahrzeuges vorgesehen. Der Fahrzeugsitz 1 umfasst einen Sitzteil 2 mit einer Sitzfläche, die einem Benutzer des Fahrzeugsitzes 1 zugewandt ist, und einer Rückenlehne 3 mit einer vorderen Lehnenfläche, die dem Benutzer zugewandt ist. Die Rückenlehne 3 weist weiters eine Rückseite 4, Seitenflächen 5 und eine Oberseite 6 auf, wobei die Seitenflächen 5 und die Oberseite 6 Schmalseiten der Rückenlehne 3 bilden. Von der Oberseite 6 steht üblicherweise eine Kopfstütze ab, die mittels Halterungsstäben oder in anderer Weise mit der Rückenlehne 3 verbunden ist, in der Regel verstellbar, oder auch als integraler Teil der Rückenlehne 3 ausgebildet sein kann. Die Kopfstütze ist in den Fig. 2 u. 3 der Einfachheit halber weggelassen.

Der Bezug umfasst einen vorderen Abschnitt 7, von dem im an den Fahrzeugsitz angelegten Zustand zumindest Teile der vorderen Lehnenfläche und der Sitzfläche überdeckt sind. Bevorzugterweise wird hierbei die Sitzfläche vom vorderen Abschnitt 7 wie dargestellt vollständig überdeckt. Weiters weist der Bezug einen hinteren Abschnitt 8 auf, der im an den Fahrzeugsitz angelegten Zustand des Bezuges einen oberen Teil der Rückseite 4 der Rückenlehne 3 überdeckt.

Der vordere Abschnitt 7 und der hintere Abschnitt 8 sind über erste und zweite Träger 9, 10 verbunden. Der erste und der zweite Träger 9,10 erstrecken sich jeweils über die Oberseite 6 der Rückenlehne 3 und zwischen ihnen liegt eine Öffnung 11 des Bezuges zum Durchtritt der Kopfstütze.

Im Ausführungsbeispiel ist ein erster Abschnitt des ersten Trägers 9 einstückig mit dem vorderen Abschnitt 7 und ein zweiter Abschnitt des ersten Trägers 9 einstückig mit dem hinteren Abschnitt 8 des Bezugs ausgebildet, wobei die beiden Abschnitte des ersten Trägers 9 durch eine Naht 12 verbunden sind. Das Gleiche gilt für den zweiten Träger 10. Die Nähte 12 liegen günstigerweise etwa mittig auf der Oberseite 6 der Rückenlehne 3.

Der Bezug besteht also aus zwei Teilstücken, die im Bereich der Mitte der Träger 9, 10 miteinander vernäht sind.

Die ersten Abschnitte der Träger 9, 10 können sich wie dargestellt in einem oberen Bereich des vorderen Abschnitts 7 und/oder in einem oberen Bereich des hinteren Abschnitts 8 fortsetzen. Es kann hierdurch ein "T-Shirt-artiges" Aussehen des an den Fahrzeugsitz 1 angelegten Bezugs erreicht werden.

Die Träger 9, 10 bzw. ihre auf der Oberseite der Rückenlehne 3 aufliegenden Abschnitte bilden zusammen einen zwischen dem vorderen Abschnitt 7 und dem hinteren Abschnitt 8 liegenden oberen Abschnitt des Bezuges, der im an den Fahrzeugsitz 1 angelegten Zustand des Bezuges auf der Oberseite 6 der Rückenlehne 3 aufliegt. Auch andere Ausbildungen eines solchen oberen Abschnitts des Bezuges sind denkbar und möglich, beispielsweise auch ohne eine Öffnung 11, wenn der Bezug für Fahrzeugsitze ohne Kopfstützen eingesetzt werden soll.

Der vordere und der hintere Abschnitt 7, 8 weisen an den beiden gegenüberliegenden Seitenrändern 13, 14 des Bezuges jeweils einen überstehenden Verbindungsfortsatz 15, 16; 17, 18 auf, der auch als Verbindungslasche bezeichnet werden könnte. Im Bereich ihrer freien Enden weisen die Verbindungsfortsätze 15-18 Klettverschluss-Teile 19, 20 auf. Diese Klettverschluss-Teile 19, 20 bilden zusammen einen Klettverschluss, über den die jeweils am gleichen Seitenrand angeordneten Verbindungsfortsätze 15,17 bzw. 16, 18 des vorderen und hinteren Abschnitts 7, 8 miteinander verbunden werden können, und zwar vorzugsweise im Bereich der Seitenflächen 5 der Rückenlehne 3. Es werden durch die Verbindungsfortsätze 15-18 in Verbindung mit den Klettverschluss-Teilen 19, 20 somit über die Seitenflächen 5 der Rückenlehne 3 sich erstreckende Verbindungen zwischen dem vorderen Abschnitt 7 und dem hinteren Abschnitt 8 ausgebildet. Diese können in einfacher Weise geöffnet und geschlossen werden. Beispielsweise können an den vom Fahrzeugsitz 1 abgewandten Außenflächen der Verbindungsfortsätze 17, 18 des hinteren Abschnitts 8 als Klettverschluss-Teile 20 die Hakenteile des Klettverschlusses und an den zum Fahrzeugsitz 1 gerichteten Innenseiten der Verbindungsfortsätze 15, 16 des vorderen Abschnitts 7 als Klettverschluss-Teile 19 die Vliesteile des Klettverschlusses angeordnet sein. Die als Vliesteile wirkenden Klettverschluss-Teile 19 können auch von den Oberflächen der Verbindungsfortsätze 15, 16 selbst ausgebildet werden, wenn diese entsprechend flauschig sind.

Denkbar und möglich wäre es auch, nur an den Seitenrändern 13, 14 entweder im Bereich des vorderen Abschnitts 7 oder im Bereich des hinteren Abschnitts 8 solche Verbindungsfortsätze 15-18 vorzusehen, welche dann im an den Fahrzeugsitz 1 angelegten Zustand um die entsprechende Seitenfläche 5 herum bis zum anderen Abschnitt 7, 8 des Bezugs verlaufen, an dem die mit den Klettverschluss-Teilen der Verbindungsfortsätze zusammenwirkenden Klettverschluss-Teile angeordnet sind (falls es sich um die Vlies-Teile handelt, so können diese wiederum von separaten, mit dem entsprechenden Abschnitt 7, 8 verbundenen Teilen oder - im Falle einer entsprechend flauschigen Ausbildung dieser Abschnitte 7, 8 -von der Oberfläche des Abschnitts 7, 8 selbst ausgebildet sein).

Im an den Fahrzeugsitz angelegten Zustand befinden sich oberhalb der von den Verbindungsfortsätzen 15-18 zwischen dem vorderen Abschnitt 7 und dem hinteren Abschnitt 8 gebildeten Verbindungen Öffnungen 21, 22. Diese werden begrenzt von den oberen Rändern der Verbindungsfortsätze 15-18, den oberhalb der Verbindungsfortsätze 15-18 liegenden Abschnitte der Seitenränder 13, 14 des Bezugs im Bereich des vorderen Abschnitts 7, des hinteren Abschnitts 8 und des diese verbindenden oberen Abschnitts.

Die Verbindungsfortsätze 15, 16 des vorderen Abschnitts 7 werden dadurch ausgebildet, dass die Seitenränder 13, 14 des vorderen Abschnitts 7 oberhalb und unterhalb des jeweiligen Verbindungsfortsatzes 15, 16 bogenförmig verlaufen und in obere und untere Ränder der Verbindungsfortsätze 15, 16 übergehen. Die Verbindungsfortsätze 17, 18 des hinteren Abschnitts 8 werden durch bogenförmige Verläufe der Seitenränder 13, 14 des hinteren Abschnitts 8 im Bereich oberhalb der Verbindungsfortsätze 17, 18, die in obere Ränder der Verbindungsfortsätze 17, 18 übergehen, in Verbindung mit dem bis zu den freien Enden der Verbindungsfortsätze 17,18 sich erstreckenden Unterrand 23 des hinteren Abschnitts 8 ausgebildet.

Zur Halterung des vorderen Abschnitts 7 in seinem die Sitzfläche 5 überdeckenden Bereich sind randseitig Gummibandschlaufen 24 angebracht. Diese können beispielsweise mittels eines zumindest großteils unterhalb der Sitzfläche 5 liegenden Bandes 25, das durch die Gummibandschlaufen 24 gefädelt ist verspannt werden, wie dies bekannt ist.

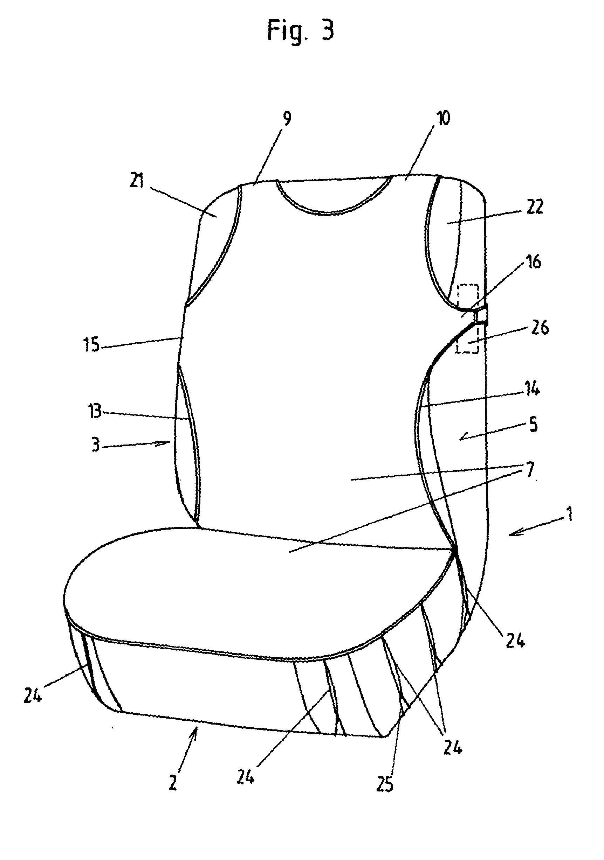

Zumindest an einer Seitenfläche 5 der Rückenlehne 3 kann der Auslass eines Seiten-Airbags vorgesehen sein, der in Fig. 3 durch eine strichlierte Linie 26 angedeutet ist. Wenn sich die mittels der Verbindungsfortsätze 15-18 ausgebildete Verbindung zwischen dem vorderen Abschnitt 7 und dem hinteren Abschnitt 8 über diesen Auslass 26 erstreckt, so wird im Falle des Auslösens des Seiten-Airbags der Klettverschluss durch den sich aufblasenden Seiten-Airbag geöffnet, sodass sich der Seiten-Airbag ungehindert entfalten kann. Wenn der Auslass 26 des Seiten-Airbags ober- oder unterhalb der mittels der Verbindungsfortsätze 15-18 hergestellten Verbindung liegt, so ist die Seitenfläche der Rückenlehne 3 im Bereich des Auslasses 26 ohnehin frei (also nicht vom Bezug bedeckt).

Ein Auslass für einen Seiten-Airbag kann sich grundsätzlich auch im Randbereich der Lehnenfläche der Rückenlehne 3 oder der Rückseite 4 der Rückenlehne 3 befinden. Auch in diesen Fällen ist die Entfaltbarkeit des Seiten-Airbags unabhängig von der Höhenlage des Auslasses gewährleistet.

Im Ausführungsbeispiel liegen die Seitenränder 13, 14 des die Rückenlehne 3 überdeckenden Bereichs des vorderen Abschnitts 7 oberhalb und unterhalb der Verbindung mit dem hinteren Abschnitt 8 über die Verbindungsfortsätze 15-18 innerhalb der Seitenränder der Lehnenfläche, d.h. die Lehnenfläche wird somit ober- und unterhalb der über die Verbindungsfortsätze 15-18 hergestellten Verbindungen randseitig nicht vollständig überdeckt. Durch den bogenförmigen Verlauf der Seitenränder 13, 14 oberhalb der über die Verbindungsfortsätze 15-18 hergestellten Verbindung zwischen dem vorderen und dem hinteren Abschnitt 7, 8 ergibt sich der Eindruck von "Ärmelausschnitten". Durch den bogenförmigen Verlauf der Seitenränder 13, 14 unterhalb der über die Verbindungsfortsätze 15-18 hergestellten Verbindungen zwischen den Abschnitten 7, 8 gibt sich der Eindruck einer "Taillierung". Insgesamt wird somit ein ansprechendes, "T-Shirt-artiges" Aussehen erreicht.

Denkbar und möglich ist es, dass der hintere Abschnitt 8 des Bezuges auch einen unteren Teil der Rückseite 4 der Rückenlehne 3 überdeckt, sich also beispielsweise bis unterhalb der Mitte der Rückseite 4 der Rückenlehne 3 oder bis zum unteren Ende der Rückseite 4 der Rückenlehne 3 erstreckt.

Weiters ist es denkbar und möglich, dass der vordere und der hintere Abschnitt 7, 8 über mehr als eine über die jeweilige Seitenfläche 5 der Rückenlehne 3 verlaufende Verbindung mittels über den jeweiligen Seitenrand 13, 14 überstehenden Verbindungsfortsätzen und diese haltenden Klettverschlüssen vorhanden sind.

Der erfindungsgemäße Bezug stellt einen Schonbezug dar, der über dem werkseitig vorgesehenen Überzug des Fahrzeugsitzes angebracht wird.

### Legende zu den Hinweisziffern:

- 1: Fahrzeugsitz
- 2: Sitzteil
- 3: Rückenlehne
- 4: Rückseite
- 5: Seitenfläche
- 6: Oberseite
- 7: vorderer Abschnitt
- 8: hinterer Abschnitt
- 9: Träger
- 10: Träger
- 11: Öffnung
- 12: Naht
- 13: Seitenrand
- 14: Seitenrand
- 15: Verbindungsfortsatz
- 16: Verbindungsfortsatz
- 17: Verbindungsfortsatz
- 18: Verbindungsfortsatz
- 19: Klett-Verschlussteil
- 20: Klett-Verschlussteil
- 21: Öffnung
- 22: Öffnung
- 23: Unterrand
- 24: Gummibandschlaufe
- 25: Band
- 26: Auslass

## Patentansprüche

1. Bezug für einen Fahrzeugsitz (1) eines Kraftfahrzeuges, der einen Sitzteil (2) mit einer einem Benutzer zugewandten Sitzfläche und eine Rückenlehne (3) mit einer dem Benutzer zugewandten vorderen Lehnenfläche aufweist, wobei der Bezug einen vorderen Abschnitt (7) zum Überdecken zumindest eines Teils der vorderen Lehnenfläche der Rückenlehne (3) und vorzugsweise auch zumindest eines Teils der Sitzfläche des Sitzteils (2) und einen hinteren Abschnitt (8) aufweist, der im an den Fahrzeugsitz (1) angelegten Zustand des Bezuges zumindest einen oberen Teil der Rückseite (4) der Rückenlehne (3) überdeckt, **dadurch gekennzeichnet, dass** der vordere Abschnitt (7) und/oder der hintere Abschnitt (8) an gegenüberliegenden Seitenrändern (13, 14) des Bezuges jeweils mindestens einen überstehenden Verbindungsfortsatz (15-18) zur Herstellung von sich über die Seitenflächen (5) der Rückenlehne (3) erstreckenden Verbindungen zwischen dem vorderen Abschnitt und dem hinteren Abschnitt aufweist bzw. aufweisen, wobei die Verbindungen mittels Klettverschlüssen (19, 20) schließbar und wieder öffenbar sind.

2. Bezug nach Anspruch 1, **dadurch gekennzeichnet, dass** der vordere Abschnitt (7) und der hintere Abschnitt (8) an beiden Seitenrändern (13,14) jeweils mindestens einen überstehenden Verbindungsfortsatz (15-18) aufweisen, wobei die Verbindungsfortsätze (15, 16) des vorderen Abschnitts (7) mit den Verbindungsfortsätzen (17, 18) des hinteren Abschnitts (8) über Klettverschlüsse miteinander verbindbar sind.

3. Bezug nach Anspruch 1 oder 2, **dadurch gekennzeichnet, dass** der jeweilige Seitenrand (13, 14) des Bezugs im Bereich des vorderen Abschnitts (7) und/oder im Bereich des hinteren Abschnitts (8) zur Ausbildung eines Verbindungsfortsatzes (15-18) oberhalb und/oder unterhalb des Verbindungsfortsatzes (15-18) einen bogenförmigen Verlauf aufweist, der in einen oberen bzw. unteren Rand des Verbindungsfortsatzes (15-18) übergeht.

4. Bezug nach einem der Ansprüche 1 bis 3, **dadurch gekennzeichnet, dass** der vordere Abschnitt (7) und der hintere Abschnitt (8) durch mindestens zwei über die Oberseite (6) der Rückenlehne (3) verlaufende Träger (9, 10) miteinander verbunden sind.

5. Bezug nach Anspruch 4, **dadurch gekennzeichnet, dass** die Verbindung des vorderen Abschnitts (7) mit dem hinteren Abschnitt (8) durch zwei über die Oberseite (6) des Fahrzeugsitzes (1) verlaufende Träger (9, 10) gebildet wird, die zwischen sich eine Öffnung (11) zum Durchtritt einer Kopfstütze bzw. von Verbindungselementen einer Kopfstütze mit der Rückenlehne (3) begrenzen.

6. Bezug nach einem der Ansprüche 1 bis 5, **dadurch gekennzeichnet, dass** zumindest an einem zur Auflage auf der Sitzfläche des Sitzteils (2) vorgesehenen Bereich des vorderen Abschnitts (7) randseitig Gummibandschlaufen (24) angebracht sind.

7. Anordnung umfassend einen Fahrzeugsitz (1) für ein Kraftfahrzeug und einen an diesem angelegten Bezug nach einem der Ansprüche 1 bis 6, wobei der vordere Abschnitt des Bezugs zumindest einen Teil der vorderen Lehnenfläche der Rückenlehne (3) des Fahrzeugsitzes und vorzugsweise auch zumindest einen Teil der Sitzfläche des Sitzteils (2) des Fahrzeugsitzes überdeckt und der hintere Abschnitt (8) des Bezugs zumindest einen oberen Teil der Rückseite (4) des Fahrzeugsitzes (1) überdeckt.

8. Anordnung nach Anspruch 7, **dadurch gekennzeichnet, dass** zumindest eine Seitenfläche (5) der Rückenlehne (3), vorzugsweise beide Seitenflächen (5) der Rückenlehne (3), über- und unterhalb der mindestens einen Verbindung des vorderen Abschnitts (7) mit dem hinteren Abschnitt (8), die über den mindestens einen Verbindungsfortsatz (15-18) erfolgt, vom Bezug unbedeckt ist.

9. Anordnung nach Anspruch 7 oder 8, **dadurch gekennzeichnet, dass** der Fahrzeugsitz (1) einen Seiten-Airbag mit einer an einer Seitenfläche (5) der Rückenlehne (3) oder einem randseitigen Bereich der vorderen Lehnenfläche der Rückenlehne (3) oder ein randseitiger Bereich der Rückseite (4) der Rückenlehne (3) liegenden Auslass (26) aufweist.

10. Anordnung nach Anspruch 9, **dadurch gekennzeichnet, dass** sich der Auslass (26) des Seiten-Airbags zumindest teilweise vom zumindest einen Verbindungsfortsatz (15-18) überdeckt wird, über den der vordere Abschnitt (7) mit dem hinteren Abschnitt (8) verbunden ist.
